# EUROPÄISCHE PATENTSCHRIFT

(11) **EP 1 057 928 B1**
(45) Veröffentlichungstag und Bekanntmachung des Hinweises auf die Patenterteilung: **09.06.2004**
(21) Anmeldenummer: 00105580.5
(22) Anmeldetag: 16.03.2000
(51) Int. Cl.: D21G 1/02

(54) **Elastische Walze und Verfahren zum Herstellen einer solchen**
Soft roll and process for making such a roll
Rouleau élastique et procédé de fabrication d' un tel rouleau

(30) Priorität: 02.06.1999 DE 19925419
(43) Veröffentlichungstag der Anmeldung: 06.12.2000
(73) Patentinhaber: Voith Paper Patent GmbH, 89522 Heidenheim (DE)
(72) Erfinder: Kärger, Jens Christian, Dr., 8405 Winterthur (CH); Vodermayer, Albert Maria, Dr., 8305 Dietlikon (CH)
(74) Vertreter: Manitz, Finsterwald & Partner GbR

(56) Entgegenhaltungen:
- WO-A-94/09208
- FR-A- 2 407 292
- US-A- 5 023 985

## Beschreibung

Die vorliegende Erfindung betrifft eine Walze, insbesondere zum Glätten von Papierbahnen, mit einem insbesondere aus Metall bestehenden harten Walzenkern, der an seiner Außenseite mit einer ein elastisches Matrixmaterial umfassenden elastischen Bezugsschicht sowie einer an der Außenseite der elastischen Bezugsschicht vorgesehenen metallischen Deckschicht versehen ist. Weiterhin ist die Erfindung auf ein Verfahren zum Herstellen einer solchen Walze gerichtet.

Elastische Walzen dieser Art werden beispielsweise bei der Satinage von Papierbahnen verwendet. Dabei bildet jeweils eine elastische Walze zusammen mit einer harten Walze einen Preßspalt, durch den die zu bearbeitende Papierbahn hindurchgeführt wird. Während die harte Walze eine beispielsweise aus Stahl oder Hartguß bestehende sehr glatte Oberfläche besitzt und für die Glättung der ihr zugewandten Seite der Papierbahn zuständig ist, bewirkt die auf die gegenüberliegende Seite der Papierbahn einwirkende elastische Walze eine Vergleichmäßigung und Verdichtung der Papierbahn im Preßnip. Die Größenordnung der Walzen liegt bei Längen von 3 bis 12 m bzw. Durchmessern von 450 bis 1500 mm. Sie halten Linienkräften bis zu 600 N/mm und Druckspannungen bis 130 N/mm² stand.

Da die Tendenz bei der Papierherstellung dahin geht, daß die Satinage im Online-Betrieb erfolgt, d.h. daß die die Papiermaschine oder Streichmaschine verlassende Papierbahn unmittelbar durch die Papierglättvorrichtung (Kalander) geführt wird, werden an die Walzen der Glättvorrichtung insbesondere bezüglich der Temperaturbeständigkeit höhere Anforderungen als bisher gestellt. Durch die im Online-Betrieb erforderlichen hohen Transportgeschwindigkeiten der Papierbahn und die damit verbundenen hohen Rotationsgeschwindigkeiten der Kalanderwalzen wird deren Nipfrequenz, das ist die Frequenz, mit der der Bezug komprimiert und wieder entlastet wird, erhöht, was wiederum zu erhöhten Walzentemperaturen führt. Diese im Online-Betrieb entstehenden hohen Temperaturen führen zu Problemen, die bei bekannten elastischen Walzen bis zur Zerstörung des Kunststoffbelages führen können. Zum einen sind bei bekannten Kunststoffbelägen maximale Temperaturdifferenzen von ca. 20°C über die Breite der Walze zulässig und zum anderen besitzen die für die Beschichtung üblicherweise verwendeten Kunststoffe einen wesentlich höheren Temperaturausdehnungskoeffizienten als die üblicherweise verwendeten Stahlwalzen bzw. Hartgußwalzen, so daß durch eine Temperaturerhöhung hohe axiale Spannungen zwischen der Stahlwalze bzw. Hartgußwalze und der mit ihr verbundenen Kunststoffbeschichtung auftreten.

Durch diese hohen Spannungen verbunden mit insbesondere punktuell auftretenden Erhitzungsstellen innerhalb der Kunststoffbeschichtung können sogenannte Hot-Spots auftreten, an denen ein Ablösen oder sogar ein Aufplatzen der Kunststoffschicht erfolgt.

Diese Hot-Spots treten insbesondere dann auf, wenn zusätzlich zu den mechanischen Spannungen und der relativ hohen Temperatur Kristallisierungspunkte in Form von beispielsweise fehlerhaften Klebungen, Ablagerungen oder überdurchschnittlichen Einbuchtungen des elastischen Belages, beispielsweise durch Falten oder Fremdkörper an der Papierbahn, vorhanden sind. In diesen Fällen kann die Temperatur an diesen Kristallisierungspunkten von üblichen 80°C bis 90°C bis auf über 150°C steigen, wodurch die erwähnte Zerstörung der Kunststoffschicht erfolgt.

Eine Walze, deren elastische Bezugsschicht mit einer zusätzlichen Metallbeschichtung versehen ist, ist aus der DE-A-412632 Oberbegriff des Anspruches 1 bekannt. Durch die metallische Deckschicht wird die Wärmeleitfähigkeit der Außenseite der Walze erhöht, so daß innerhalb des Preßspalts auftretende unerwünschte Hitze schnell abgeführt werden kann und die Temperatur während der Behandlung der Warenbahn im wesentlichen konstant gehalten werden kann.

Problematisch an einer metallischen Bezugsschicht ist, daß die Elastizität der Oberfläche der Walze abhängig von der Dicke der metallischen Bezugsschicht abnimmt. Wird die metallische Deckschicht zu dick gewählt, so wird die Elastizität der Oberfläche der Walze so gering, daß das Glättergebnis darunter leidet. Weiterhin ist die Aufbringung einer entsprechend dünnen Metallschicht relativ aufwendig und es ist schwierig, eine Metallschicht der gewünschten geringen Dicke gleichmäßig über die gesamte Walzenoberfläche zu verteilen. Darüber hinaus ist die Verbindung zwischen der elastische Bezugsschicht und der metallischen Deckschicht in vielen Fällen nur ungenügend, so daß im Betrieb ein Ablösen der metallischen Deckschicht erfolgen kann.

Es ist eine Aufgabe der vorliegenden Erfindung, eine Walze der eingangs genannten Art anzugeben, die zumindest an ihrer Oberfläche eine gute Wärmeleitfähigkeit besitzt, wobei die metallische Deckschicht einfach und kostengünstig herstellbar und sicher mit der darunterliegenden elastischen Bezugsschicht verbunden sein soll. Weiterhin soll ein Verfahren zum Herstellen einer solchen Walze angegeben werden.

Der die Walze betreffende Teil der Aufgabe wird erfindungsgemäß ausgehend von einer Walze der eingangs genannten Art dadurch gelöst, daß die metallische Deckschicht aus Metallfasern und/oder aus metallbeschichteten Fasern besteht. Ein entsprechendes erfindungsgemäßes Verfahren ist dadurch gekennzeichnet, daß zur Erzeugung der metallischen Deckschicht eine Vielzahl von Metallfasern und/oder von metallbeschichteten Fasern auf die elastische Bezugsschicht aufgewickelt wird.

Durch die Verwendung von Metallfasern bzw. metallbeschichteten Fasern zur Bildung der metallischen Deckschicht kann zum einen eine sehr dünne Deckschicht erzeugt werden, die darüber hinaus, bei Verwendung von metallbeschichteten Fasern und geeignetem Fasermaterial, eine höhere Elastizität besitzt als eine aus reinem Metall bestehende Deckschicht. Durch die metallische Deckschicht wird eine gute Wärmeleitfähigkeit der Oberfläche der Walze erzielt, so daß die im Betrieb innerhalb des Preßspalts auftretende Wärme schnell nach außen abgeführt werden kann. Dadurch ist gewährleistet, daß die Temperatur während der Behandlung der Warenbahn im Preßspalt im wesentlichen konstant gehalten werden kann.

Weiterhin kann insbesondere durch radial nach innen aus der metallischen Deckschicht in die elastische Bezugsschicht hineinragende Fasern die Verbindung zwischen der metallischen Deckschicht und der elastischen Bezugsschicht verbessert werden, so daß eine Ablösung der Deckschicht im Betrieb weitgehend ausgeschlossen ist.

Nach einer vorteilhaften Ausführungsform der Erfindung sind die Fasern in einem oder mehreren Faserbündeln und/oder Faserrovings und/oder Faservliesen zusammengefaßt. Insbesondere bei der Bildung der metallischen Deckschicht durch metallbeschichtete oder aus Metall bestehende Faserrovings, die im wesentlichen aus einer Vielzahl von einlagig nebeneinanderliegenden Fasern bestehen, wird eine sehr dünne Metallschicht mit hoher Flexibilität erzeugt.

Die metallische Deckschicht kann bevorzugt eine radiale Dicke von zwischen ca. 2 µm und 30 µm, bevorzugt von zwischen ca. 5 µm und 10 µm besitzen.

Bevorzugt ist die Oberfläche der metallischen Deckschicht geschliffen und insbesondere poliert, um auf diese Weise eine möglichst glatte Walzenoberfläche zur Erzeugung von qualitativ hochwertigem Papier zu schaffen. Die Oberfläche der metallischen Deckschicht kann dabei einen Ra-Wert besitzen, der kleiner als 0.05 µm, insbesondere kleiner als 0.03 µm ist.

Nach einer bevorzugten Ausführungsform der Erfindung ist das Metall der Deckschicht ein bei niedrigen Temperaturen, insbesondere bei Temperaturen unter ca. 600° C, bevorzugt bei ca. 480° C oder darunter schmelzendes Metall, insbesondere Zirkon. Durch die Verwendung eines niedrigschmelzenden Metalls wird die Herstellung einer erfindungsgemäß ausgebildeten Walze vereinfacht, da sowohl das Fasermaterial als auch das Matrixmaterial eine geringere Hitzbeständigkeit besitzen müssen als bei Verwendung von bei hohen Temperaturen schmelzendem Metall. Die Verwendung von Zirkon ist vorteilhaft, da Zirkon eine besonders gute Verbindung mit den üblicherweise für die Bildung der elastischen Bezugsschicht verwendeten Kunststoffmaterialen eingeht. Dadurch wird die Verbindung zwischen der elastischen Bezugsschicht und der metallischen Deckschicht weiter verbessert.

Vorteilhaft werden in dein Matrixmaterial Füllstoffe eingebettet, die bevorzugt eine größere Steifigkeit besitzen als das Matrixmaterial, wodurch die erforderlichen Steifigkeit der elastischen Bezugsschicht erreicht wird. Weiterhin ist vorteilhaft die Wärmeleitfähigkeit der Füllstoffe größer als die Wärmeleitfähigkeit des Matrixmaterials. Dadurch wird erreicht, daß die Hitze an innerhalb der elastischen Bezugsschicht auftretenden Überhitzungsstellen schnell beispielsweise zum Walzenkern oder zur metallischen Deckschicht und von dort jeweils seitlich vollständig abgeführt wird.

Vorteilhaft ist der Wärmeausdehnungskoeffizient der Füllstoffe kleiner als der Wärmeausdehnungskoeffizient des Matrixmaterials und insbesondere im wesentlichen gleich groß wie der Wärmeausdehnungskoeffizient des Walzenkerns. Auf diese Weise kann eingestellt werden, daß der Gesamtwärmeausdehnungskoeffizient der elastischen Bezugsschicht kleiner ist als der Wärmeausdehnungskoeffizient des Matrixmaterials, so daß die durch die Erhitzung im Betrieb auftretenden Längsspannungen zwischen dem Walzenkern und der elastischen Bezugsschicht verringert bzw. vollständig kompensiert werden können. Dazu ist es vorteilhaft, daß die Füllstoffe aus Kohlenstoff und/oder aus Glas und/oder aus Metall bestehen.

Nach einer bevorzugten Ausführungsform der Erfindung sind die Füllstoffe als Fasern, insbesondere als Faserbündel und/oder als Faserrovings und/oder Faservlies ausgebildet. Dabei ist es vorteilhaft, daß zumindest ein Teil der Fasern aus dem gleichen Material wie die Fasern der metallischen Deckschicht ausgebildet sind und insbesondere die Fasern der metallischen Deckschicht und die in dem Matrixmaterial eingebetteten Fasern zumindest teilweise Fasern des gleichen Faserbündels, Faserrovings und/oder Faservlieses sind. Werden sowohl die elastische Bezugsschicht als auch die metallische Deckschicht im wesentlichen durch die gleichen Faserbündel, Faserrovings oder Faservliese gebildet, so besitzt die elastische Bezugsschicht und die metallische Deckschicht eine einheitliche, durchgängige, durch die Fasern gebildete Armierung. Eine Ablösung der metallischen Deckschicht von der elastischen Bezugsschicht ist auf diese Weise praktisch ausgeschlossen.

Zur Erzeugung einer elastischen Walze wird erfindungsgemäß eine Vielzahl von Metallfasern und/oder von metallbeschichteten Fasern auf die elastische Bezugsschicht aufgewickelt. Dabei können die Fasern in Form eines oder mehrerer Faserbündel, Faserrovings oder Faservliese auf die Bezugsschicht aufgewickelt werden, wobei insbesondere zur Erzeugung einer möglichst dünnen elastischen metallischen Deckschicht eine im wesentliche einschichtige Faserlage gewickelt wird.

Die Fasern werden vor dem Aufwickeln auf die elastische Bezugsschicht bevorzugt mit Metall beschichtet, insbesondere durch ein Metallbad gezogen, oder im wesentlichen trocken auf die Bezugsschicht aufgewickelt und während oder nach dem Aufwickeln mit dem Metall insbesondere in flüssiger Form, beschichtet bzw. beaufschlagt.

In ähnlicher Weise können zur Erzeugung der elastischen Bezugsschicht insbesondere mit flüssigem Matrixmaterial getränkte Fasern, insbesondere in Form eines oder mehrerer Faserbündel und/oder Faserrovings und/oder Faservliese auf den Walzenkern aufgewickelt werden. Dabei können die Fasern vor dem Aufwickeln auf den Walzenkern mit dem Matrixmaterial beschichtet werden, insbesondere durch ein Matrixbad gezogen werden. Es ist jedoch auch möglich, daß die Fasern im wesentlichen trocken auf den Walzenkern aufgewickelt werden und während oder nach dem Aufwickeln mit dem Matrixmaterial, insbesondere in flüssiger Form beschichtet bzw. beaufschlagt werden.

Werden vorteilhaft die elastische Bezugsschicht und die metallische Deckschicht durch die gleichen Faserbündel und/oder Faserrovings und/oder Faservliese verwendet, kann eine erfindungsgemäß ausgebildete Walze besonders einfach durch einen einzigen Wickelvorgang hergestellt werden. In diesem Fall können die Fasern zunächst zur Erzeugung der elastischen Bezugsschicht durch ein Matrixbad gezogen und auf den Walzenkern aufgewickelt werden, bis die elastische Bezugsschicht die gewünschte Dicke erreicht hat. Anschließend können die gleichen Fasern weiter auf die soeben erzeugte elastische Bezugsschicht aufgewickelt werden, wobei sie vorher durch ein Metallbad geführt werden. Da in diesem Fall die elastische Bezugsschicht und die metallische Deckschicht aus den gleichen Faserbündeln bestehen, ist eine Ablösung der metallischen Deckschicht von der elastischen Bezugsschicht praktisch ausgeschlossen.

Nach Aufbringen der Metallfasern und/oder metallbeschichteten Fasern auf die Bezugsschicht wird die Oberfläche der metallischen Deckschicht geschliffen und insbesondere poliert, bis die gewünschte Oberflächengüte der elastischen Walze erreicht wird.
Weitere vorteilhafte Ausführungsformen der Erfindung sind in den Unteransprüchen angegeben.

Die Erfindung wird nachfolgend anhand eines Ausführungsbeispiels unter Bezugnahme auf die Zeichnungen näher beschrieben; in dieser zeigen:
- Fig. 1: einen schematischen Darstellung einer erfindungsgemäß ausgebildete elastische Walze bei der Erzeugung der elastischen Bezugsschicht,
- Fig. 2: einen schematischen Querschnitt durch die Walze gemäß Figur 1 mit vollständiger elastischer und metallischer Beschichtung und
- Fig. 3: eine Detailansicht aus Fig. 2.

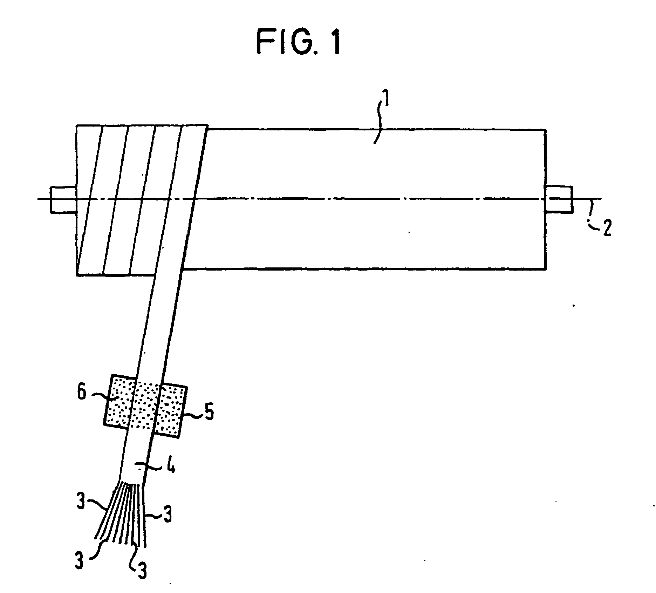

Die in Fig. 1 dargestellte Walze umfaßt einen beispielsweise aus Stahl oder Hartguß bestehenden Walzenkern 1, der um eine Achse 2 drehbar gelagert ist. Eine Vielzahl von Fasern 3, die zu einem Faserbündel 4 zusammengefaßt sind, werden gemäß Fig. 1 auf die Außenseite des Walzenkerns 1 aufgewickelt. Dabei wird das Faserbündel 4 vor Aufwickeln auf den Walzenkern 1 durch eine schematisch dargestellte Imprägniervorrichtung 5 geführt, wo es mit flüssigem Matrixmaterial 6 beschichtet wird.

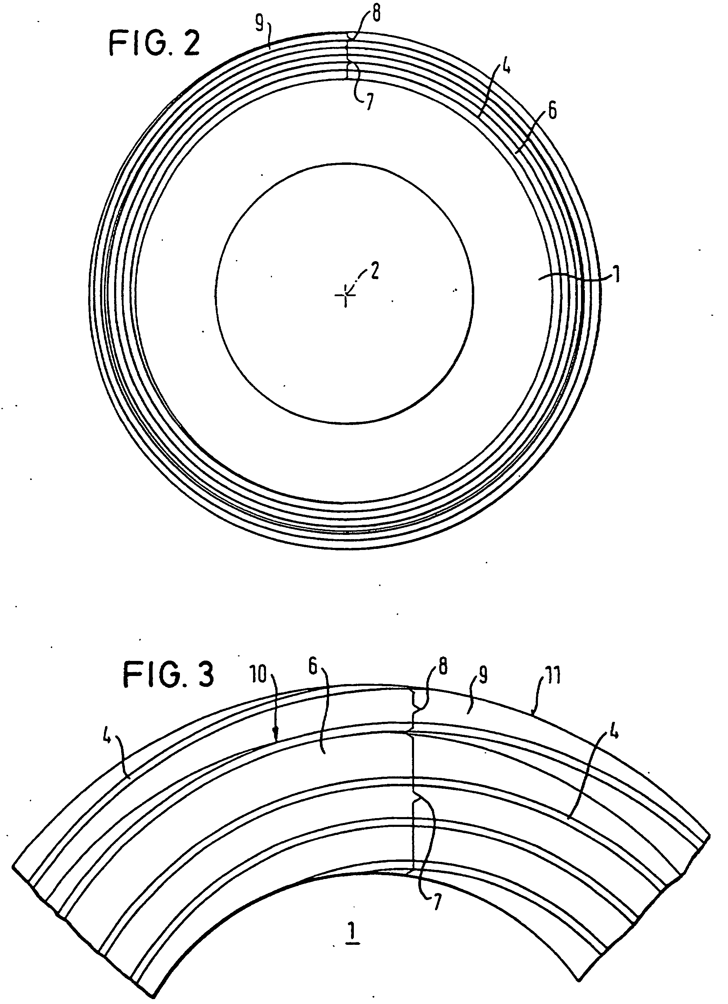

Auf den Walzenkern 1 werden so viele Lagen von Faserbündeln 4 aufgewickelt, bis eine elastische Bezugsschicht 7 (siehe Fig. 2 und 3) der gewünschten Dicke entsteht. Dabei können entweder ein Faserbündel 4 mehrfach oder mehrere separate Faserbündel 4 einfach oder mehrfach um den Walzenkern 1 gewickelt werden.

Anschließend wird das Faserbündel 4 weiter auf die vollständig ausgebildete elastische Bezugsschicht 7 aufgewickelt, wobei anstelle des flüssigen Matrixmaterials über die Imprägniervorrichtung 5 oder eine weitere Imprägniervorrichtung die Fasern 3 des Faserbündels 4 vor dem Aufwickeln mit flüssigem Metall beschichtet werden. Auf diese Weise wird auf der elastische Bezugsschicht 7 eine metallische Deckschicht 8 (siehe Fig. 2 und 3) erzeugt, die vorteilhaft aus einer einzigen oder zumindest aus einer geringen Anzahl von Faserlagen mit Metallbeschichtung besteht. Sind die Fasern 3 bereits als Metallfasern ausgebildet, so können Sie zum Erzeugen der Deckschicht 8 soweit erhitzt werden, daß sie zumindest im Oberflächenbereich anschmelzen. Auf diese Weise schmelzen die Metallfasern zusammen und es wird nach dem Aufwickeln eine homogene metallische Deckschicht 8 erzeugt. Grundsätzlich ist es auch möglich, daß die Metallfasern erst nach dem Aufwickeln soweit erhitzt werden, daß ihre Oberfläche anschmilzt, wodurch die homogene Deckschicht erzeugt wird.

Aus Fig. 2 und insbesondere der Detailansicht gemäß Fig. 3 ist zu erkennen, daß die metallische Deckschicht 8 im wesentlichen aus einer von dem Faserbündel 4 gebildeten Faserlage gebildet ist, die mit Metall 9 beschichtet bzw. in diese eingebettet ist. Entsprechend ist die elastische Bezugsschicht 7 aus eine Vielzahl von spiralförmig angeordneten, durch das Faserbündel 4 gebildeten Faserlagen aufgebaut, die in dem Matrixmaterial 6 eingebettet sind.

Die Größen- und Dickenverhältnisse sind in den Fig. 2 und 3 nicht maßstabsgerecht ausgeführt, da bei einer tatsächlichen Dicke der metallischen Deckschicht von beispielsweise 10 µm diese in den Figuren nicht erkennbar wäre.

Insbesondere aus Fig. 3 ist deutlich zu erkennen, daß die metallische Deckschicht 8 und die elastische Bezugsschicht 7 als Träger für das Matrixmaterial 6 bzw. das Metall 9 das gleiche Faserbündel 4 besitzen, das an der mit 10 bezeichneten Stelle aus der elastische Bezugsschicht 7 aus- und in die metallische Deckschicht 8 eintritt. Die elastische Bezugsschicht 7 und die metallische Deckschicht 8 besitzen somit durch das Faserbündel 4 einen einheitlichen Aufbau, so daß sie über das Faserbündel 4 sicher miteinander verbunden sind.

Nach vollständig gebildeter metallischer Deckschicht 8 wird deren Oberfläche 11 geschliffen und ggf. poliert, so daß die Oberfläche 11 der erfindungsgemäßen Walze extrem glatt ausgebildet ist.

Die durch das Faserbündel 4 gebildete einschichtige Faserlage in der metallischen Deckschicht 8 gibt dieser einen sehr stabilen Aufbau und bewirkt gleichzeitig bei Verwendung geeigneter Fasermaterialen eine hohe Flexibilität der metallischen Deckschicht 8, so daß die Beschichtung der erfindungsgemäß ausgebildeten Walze trotz der metallischen Deckschicht 8 eine hohe Flexibilität besitzt.

### Bezugszeichenliste

- 1: Walzenkern
- 2: Achse
- 3: Fasern
- 4: Faserbündel
- 5: Imprägniervorrichtung
- 6: Matrixmaterial
- 7: elastische Bezugsschicht
- 8: metallische Deckschicht
- 9: Metall
- 10: Übergangspunkt
- 11: Oberfläche

## Patentansprüche

1. Walze, insbesondere zum Glätten von Papierbahnen, mit einem insbesondere aus Metall bestehenden harten Walzenkern (1), der an seiner Außenseite mit einer ein elastisches Matrixmaterial (6) umfassenden elastischen Bezugsschicht (7) sowie einer an der Außenseite der elastischen Bezugsschicht (7) vorgesehenen metallischen Deckschicht (8) versehen ist,
**dadurch gekennzeichnet,**
**daß** die metallische Deckschicht (8) aus Metallfasern und/oder aus metallbeschichteten Fasern (3) besteht.

2. Walze nach Anspruch 1,
**dadurch gekennzeichnet,**
**daß** die Fasern (3) in einem oder mehreren Faserbündeln (4) und/oder Faserrovings und/oder Faservliesen zusammengefaßt sind und/oder daß die metallische Deckschicht (8) aus einer im wesentlichen einschichtigen Faserlage besteht.

3. Walze nach Anspruch 1 oder 2,
**dadurch gekennzeichnet,**
**daß** die metallische Deckschicht (8) eine radiale Dicke von zwischen ca. 2 µm und 30 µm, bevorzugt von zwischen ca. 5 µm und 10 µm besitzt und/oder daß die Oberfläche der metallischen Deckschicht (8) geschliffen und insbesondere poliert ist und/oder daß die Oberfläche (11) der metallischen Deckschicht (8) einen Ra-Wert besitzt, der kleiner als 0.05 µm, insbesondere kleiner als 0.03 µm ist.

4. Walze nach einem der vorhergehenden Ansprüche,
**dadurch gekennzeichnet,**
**daß** das Metall (9) der Deckschicht (8) ein bei niedrigen Temperaturen, insbesondere bei Temperaturen unter ca. 600° C, bevorzugt bei ca. 480° C oder darunter schmelzendes Metall, insbesondere Zirkon ist.

5. Walze nach einem der vorhergehenden Ansprüche,
**dadurch gekennzeichnet,**
**daß** in dem Matrixmaterial (6) Füllstoffe (3) eingebettet sind, insbesondere. daß die Füllstoffe (3) eine größere Steifigkeit besitzen als das Matrixmaterial (6) und/oder daß die Wärmeleitfähigkeit der Füllstoffe (3) größer ist als die Wärmeleitfähigkeit des Matrixmaterials (6).

6. Walze nach Anspruch 5,
**dadurch gekennzeichnet,**
**daß** der Wärmeausdehnungskoeffizient der Füllstoffe (3) kleiner ist als der Wärmeausdehnungskoeffizient des Matrixmaterials (6) und insbesondere im wesentlichen gleich groß wie der Wärmeausdehnungskoeffizient des Walzenkerns (1) ist und/oder daß die Füllstoffe (3) aus Kohlenstoff und/oder aus Glas und/oder aus Metall bestehen.

7. Walze nach einem der Ansprüche 5 oder 6,
**dadurch gekennzeichnet,**
**daß** die Füllstoffe als Fasern (3), insbesondere als Faserbündel (4) und/oder als Faserrovings und/oder als Faservlies ausgebildet sind, und insbesondere daß zumindest ein Teil der Fasern (3) aus dem gleichen Material wie die Fasern der metallischen Deckschicht (8) ausgebildet sind und/oder daß die Fasern (3) der metallischen Deckschicht (8) und die in dem Matrixmaterial (6) eingebetteten Fasern (3) zumindest teilweise Fasern des gleichen Faserbündels (4), Faserrovings und/oder Faservlieses sind.

8. Walze nach Anspruch 7,
**dadurch gekennzeichnet,**
**daß** zumindest ein Teil, insbesondere ein überwiegender Teil der Fasern (3) in axialer Richtung ausgerichtet sind und/oder daß zumindest ein Teil, insbesondere ein überwiegender Teil der Fasern (3) in radialer Richtung ausgerichtet sind und/oder daß zumindest ein Teil, insbesondere ein überwiegender Teil der Fasern (3) statistisch verteilt ausgerichtet sind und/oder daß die Fasern (3) in einer Faserlage oder in radial aufeinanderfolgenden Faserlagen angeordnet sind.

9. Walze nach einem der Ansprüche 5 bis 8,
**dadurch gekennzeichnet,**
**daß** zusätzlich zu den Füllstoffen (3) weitere Füllstoffe, insbesondere in Form von Fasern oder Pulver in dem Matrixmaterial angeordnet sind, insbesondere daß die weiteren Füllstoffe aus Quarz und/oder PTFE bestehen.

10. Walze nach einem der vorhergehenden Ansprüche,
**dadurch gekennzeichnet,**
**daß** das Matrixmaterial (6) ein Kunststoff, insbesondere ein Duroplast oder ein Thermoplast ist und/oder daß das Matrixmaterial (6) eine Harz/Härter-Kombination ist.

11. Verfahren zum Herstellen einer elastischen Walze nach einem der vorherigen Ansprüche, mit einem insbesondere aus Metall bestehenden harten Walzenkern, der mit einer ein elastisches Matrixmaterial umfassenden elastischen Bezugsschicht sowie einer an der Außenseite der elastischen Bezugsschicht vorgesehenen metallischen Deckschicht versehen ist,
**dadurch gekennzeichnet,**
**daß** zur Erzeugung der metallischen Deckschicht eine Vielzahl von Metallfasern und/oder von metallbeschichteten Fasern auf die elastische Bezugsschicht aufgewickelt wird.

12. Verfahren nach Anspruch 11,
**dadurch gekennzeichnet,**
**daß** die Fasern in Form eines oder mehrerer Faserbündel und/oder Faserrovings und/oder Faservliese auf die Bezugsschicht aufgewikkelt werden, wobei ein Roving jeweils aus einer Vielzahl von nebeneinanderliegenden Fasern der gleichen Art besteht, und/oder daß zur Erzeugung der metallischen Deckschicht eine im wesentlichen einschichtige Faserlage gewickelt wird.

13. Verfahren nach Anspruch 11 oder 12,
**dadurch gekennzeichnet,**
**daß** die Fasern vor dem Aufwickeln auf die elastische Bezugsschicht mit Metall beschichtet werden, insbesondere durch ein Metallbad gezogen werden, oder daß die Fasern im wesentlichen trocken auf die Bezugsschicht aufgewickelt werden und während oder nach dem Aufwickeln mit dem Metall, insbesondere in flüssiger Form, beschichtet bzw. beaufschlagt werden, oder daß zur Erzeugung der elastischen Bezugsschicht insbesondere mit flüssigem Matrixmaterial getränkte Fasern, insbesondere in Form eines oder mehrerer Faserbündel und/oder Faserrovings und/oder Faservliese auf den Walzenkern aufgewickelt werden, wobei insbesondere die Fasern vor dem Aufwickeln auf den Walzenkern mit dem Matrixmaterial beschichtet werden, insbesondere durch ein Matrixbad gezogen werden, oder die Fasern im wesentlichen trocken auf den Walzenkern aufgewickelt werden und während oder nach dem Aufwickeln mit dem Matrixmaterial, insbesondere in flüssiger Form, beschichtet bzw. beaufschlagt werden.

14. Verfahren nach einem der Ansprüche 12 oder 13,
**dadurch gekennzeichnet,**
**daß** nach Bilden der elastischen Bezugsschicht die gleichen Faserbündel und/oder Faserrovings und/oder Faservliese zur Erzeugung der metallischen Deckschicht verwendet werden.

15. Verfahren nach einem der Ansprüche 11 bis 14,
**dadurch gekennzeichnet,**
**daß** als Fasern weiche synthetische Fasern, beispielsweise aus Aramid, und/oder Kohlenstoffasern verwendet werden und/oder daß nach Aufbringen der Metallfasern und/oder der metallbeschichteten Fasern auf die Bezugsschicht die Oberfläche der metallischen Deckschicht geschliffen und insbesondere poliert wird und/oder daß in das Matrixmaterial Füllstoffe, insbesondere Fasern oder Pulver, bevorzugt aus Kohlenstoff und/oder Glas, eingebettet werden.

## Claims

1. A roll, in particular for the smoothing of paper webs, having a hard roll core (1) consisting in particular of metal and being provided on its outside with a resilient covering layer (7) comprising a resilient matrix material (6) and a metallic top layer (8) provided on the outside of the resilient covering layer (7), **characterised in that** the metallic top layer (8) consists of metal fibres and/or of metal coated fibres (3).

2. A roll in accordance with claim 1, **characterised in that** the fibres (3) are collected in one or more fibre bundles (4) and/or fibre rovings and/or fibre mats; and/or **in that** the metal top layer (8) consists of a substantially one-ply fibre layer.

3. A roll in accordance with claim 1 or claim 2, **characterised in that** the metallic top layer (8) has a radial thickness of between approximately 2 µm and 30 mm, preferably of between approximately 5 µm and 10 µm; and/or **in that** the surface of the metallic top layer (8) is ground, and is in particular polished; and/or **in that** the surface (11) of the metallic top layer (8) has an Ra value which is smaller than 0.05 µm, in particular smaller than 0.03 µm.

4. A roll in accordance with any one of the preceding claims, **characterised in that** the metal (9) of the top layer (8) is a metal, in particular zircon, which melts at low temperatures, in particular at temperatures below approximately 600°C, preferably at 480°C or under.

5. A roll in accordance with any one of the preceding claims, **characterised in that** fillers (3) are embedded in the matrix material (6); in particular **in that** the fillers (3) have a larger stiffness than the matrix material (6); and/or **in that** the thermal conductivity of the fillers (3) is larger than the thermal conductivity of the matrix material (6).

6. A roll in accordance with claim 5, **characterised in that** the coefficient of thermal expansion of the fillers (3) is lower than the coefficient of thermal expansion of the matrix material (6) and is in particular equal to the coefficient of thermal expansion of the roll core (1); and/or **in that** the fillers (3) consist of carbon and/or of glass and/or of metal.

7. A roll in accordance with any one of claims 5 or 6, **characterised in that** the fillers are made as fibres (3), in particular as fibre bundles (4), and/or as fibre rovings and/or as a fibre mat; and in particular **in that** at least some of the fibres (3) are made of the same material as the fibres of the metallic top layer (8); and/or **in that** the fibres (3) of the metallic top layer (8) and the fibres (3) embedded in the matrix material (6) are at least partly fibres of the same fibre bundle (4), of the same fibre roving and/or of the same fibre mat.

8. A roll in accordance with claim 7, **characterised in that** at least some of the fibres (3), in particular a predominant part of them, are aligned in the axial direction; and/or **in that** at least some of the fibres (3), in particular a predominant part of them, are aligned in the radial direction; and/or **in that** at least some of the fibres (3), in particular a predominant part of them, are aligned statistically distributed; and/or **in that** the fibres (3) are arranged in a fibre layer or in radial fibre layers following one another.

9. A roll in accordance with any one of claims 5 to 8, **characterised in that**, in addition to the fillers (3), further fillers, in particular in the form of fibres or powder, are arranged in the matrix material; in particular **in that** the further fillers consist of quartz and/or of PTFE.

10. A roll in accordance with any one of the preceding claims, **characterised in that** the matrix material (6) is a plastic, in particular a thermosetting plastic or a thermoplastic; and/or **in that** the matrix material (6) is a resin/hardener combination.

11. A method for the manufacture of a resilient roll in accordance with any one of the preceding claims, comprising a hard roll core consisting in particular of metal and being provided with a resilient covering layer including a resilient matrix material and a metallic top layer provided at the outside of the resilient covering layer, **characterised in that**, for the production of the metallic top layer, a plurality of metal fibres and/or of metal coated fibres is wound onto the resilient covering layer.

12. A method in accordance with claim 11, **characterised in that** the fibres are wound onto the covering layer in the form of one or more fibre bundles and/or fibre rovings and/or fibre mats, with a roving in each case consisting of a plurality of fibres of the same kind lying next to one another; and/or **in that** a substantially one-ply fibre layer is wound to produce the metallic top layer.

13. A method in accordance with claim 11 or claim 12, **characterised in that**, prior to the winding on to the resilient covering layer, the fibres are coated with metal, are in particular drawn through a metal bath; or **in that** the fibres are wound onto the covering layer substantially dry and are coated with or acted on by the metal, in particular in liquid form, during or after the winding on; or **in that** in particular fibres soaked in liquid matrix material, in particular in the form of one or more fibre bundles and/or fibre rovings and/or fibre mats, are wound onto the roll core for the production of the resilient covering layer, with in particular the fibres being coated with the matrix material, in particular being drawn through a matrix bath, prior to the winding on to the roll core, or the fibres being wound on to the roll core substantially dry and being coated with or acted on by the matrix material, in particular in liquid form, during or after the winding on.

14. A method in accordance with any one of claims 12 or 13, **characterised in that**, after forming the resilient covering layer, the same fibre bundles and/or fibre rovings and/or fibre mats are used for the production of the metallic top layer.

15. A method in accordance with any one of claims 11 to 14, **characterised in that** soft synthetic fibres, for example of aramide, and/or carbon fibres are used as the fibres; and/or **in that**, after application of the metal fibres and/or of the metal coated fibres to the covering layer, the surface of the metallic top layer is ground, and is in particular polished; and/or **in that** fillers, in particular fibres or powder, preferably of carbon and/or of glass, are embedded in the matrix material.

## Revendications

1. Rouleau, en particulier pour le lissage de bandes de papier, avec un noyau de rouleau (1) dur composé en particulier de métal qui est doté sur sa face externe d'une couche de revêtement (7) élastique comprenant un matériau de matrice (6) élastique, ainsi qu'une couche de couverture (8) métallique prévue sur la face externe de la couche de revêtement (7) élastique,
**caractérisé en ce que**
la couche de couverture (8) métallique est composée de fibres métalliques et/ou de fibres (3) recouvertes de métal.

2. Rouleau selon la revendication 1,
**caractérisé en ce que**
les fibres (3) sont réunies dans un ou plusieurs faisceaux de fibres (4) et/ou stratifils fibreux et/ou non-tissés, et/ou la couche de couverture (8) métallique est composée d'une nappe fibreuse sensiblement monocouche.

3. Rouleau selon la revendication 1 ou 2,
**caractérisé en ce que**
la couche de couverture (8) métallique possède une épaisseur radiale comprise entre environ 2 µm et 30 µm, de préférence entre environ 5 µm et 10 µm, et/ou la surface de la couche de couverture (8) métallique est poncée et en particulier polie, et/ou la surface (11) de la couche de couverture (8) métallique possède une valeur Ra qui est inférieure à 0,05 µm, en particulier inférieure à 0,03 µm.

4. Rouleau selon l'une des revendications précédentes,
**caractérisé en ce que**
le métal (9) de la couche de couverture (8) est un métal, en particulier du zirconium, fondant à basses températures, en particulier à des températures inférieures à environ 600°C, de préférence à environ 480°C ou moins.

5. Rouleau selon l'une des revendications précédentes,
**caractérisé en ce que**
des matières de remplissage (3) sont incorporées dans le matériau de matrice (6), en particulier les matières de remplissage (3) possèdent une rigidité supérieure au matériau de matrice (6) et/ou la conductibilité thermique des matières de remplissage (3) est supérieure à celle du matériau de matrice (6).

6. Rouleau selon la revendication 5,
**caractérisé en ce que**
le coefficient d'expansion thermique des matières de remplissage (3) est inférieur au coefficient d'expansion thermique du matériau de matrice (6), et en particulier sensiblement aussi important que le coefficient d'expansion thermique du noyau de rouleau (1), et/ou les matières de remplissage (3) sont composées de carbone et/ou de verre et/ou de métal.

7. Rouleau selon l'une des revendications 5 et 6,
**caractérisé en ce que**
les matières de remplissage (3), sont configurées en particulier comme faisceaux de fibres (4) et/ou comme stratifils fibreux et/ou comme non-tissés, et en particulier au moins une partie des fibres (3) est configurée dans le même matériau que les fibres de la couche de couverture (8) métallique, et/ou les fibres (3) de la couche de couverture (8) métallique et les fibres (3) incorporées dans le matériau de matrice (6) sont au moins partiellement des fibres du même faisceau de fibres (4), du même stratifil fibreux et/ou du même non-tissé.

8. Rouleau selon la revendication 7,
**caractérisé en ce que**
au moins une partie, en particulier une partie principale des fibres (3) est orientée dans le sens axial, et/ou au moins une partie, en particulier une partie principale des fibres (3) est orientée dans le sens radial et/ou au moins une partie, en particulier une partie principale des fibres (3), est orientée de façon statistiquement répartie, et/ou les fibres (3) sont disposées dans une nappe fibreuse ou dans des nappes fibreuses radialement successives.

9. Rouleau selon l'une des revendications 5 à 8,
**caractérisé en ce que**
en sus des matières de remplissage (3), d'autres matières de remplissage sont disposées dans le matériau de matrice en particulier sous la forme de fibres ou de poudre, en particulier, les autres matières de remplissage sont composées de quartz et/ou de PTFE.

10. Rouleau selon l'une des revendications précédentes,
**caractérisé en ce que**
le matériau de matrice (6) est un matériau plastique, en particulier une matière thermodurcissable ou un thermoplastique, et/ou le matériau de matrice (6) est une combinaison résine/durcisseur.

11. Procédé de fabrication d'un rouleau élastique selon l'une des revendications précédentes, avec un noyau de rouleau dur composé en particulier de métal, qui est doté d'une couche de revêtement élastique entourant un matériau de matrice élastique, ainsi que d'une couche de couverture métallique prévue sur la face externe de la couche de revêtement élastique,
**caractérisé en ce que**
à des fins de production de la couche de couverture métallique, une multitude de fibres métalliques et/ou de fibres recouvertes de métal sont enroulées sur la couche de revêtement élastique.

12. Procédé selon la revendication 11,
**caractérisé en ce que**
les fibres sont enroulées sur la couche de revêtement sous la forme d'un ou plusieurs faisceaux de fibres et/ou stratifils fibreux et/ou non-tissés, un stratifil fibreux étant respectivement composé d'une multitude de fibres adjacentes du même type, et/ou une nappe fibreuse essentiellement monocouche est enroulée pour la production de la couche de couverture métallique.

13. Procédé selon la revendication 11 ou 12,
**caractérisé en ce que**
les fibres avant l'enroulement sur la couche de revêtement élastique sont recouvertes de métal, et sont en particulier tirées par un bain métallique, ou **en ce que** les fibres essentiellement sèches sont enroulées sur la couche de revêtement, puis sont garnies de métal pendant ou après l'enroulement, en particulier sous forme liquide, ou **en ce que** pour la production de la couche de revêtement élastique, des fibres imbibées en particulier de matériau de matrice liquide, en particulier sous la forme d'un ou plusieurs faisceaux de fibres et/ou stratifils fibreux et/ou non-tissés, sont enroulées sur le noyau de rouleau, moyennant quoi en particulier les fibres sont recouvertes de matériau de matrice avant l'enroulement sur le noyau de rouleau, sont tirées en particulier par un bain matriciel, ou les fibres essentiellement sèches sont bobinées sur le noyau de rouleau, et sont recouvertes ou garnies de matériau de matrice, en particulier sous la forme liquide, pendant ou après l'enroulement.

14. Procédé selon l'une des revendications 12 et 13,
**caractérisé en**
après la formation de la couche de revêtement élastique, les mêmes faisceaux de fibres et/ou stratifils fibreux et/ou non-tissés sont utilisés pour la production de la couche de couverture métallique.

15. Procédé selon l'une des revendications 11 à 14,
**caractérisé en ce que**
des fibres synthétiques souples, par exemple des fibres d'aramide et/ou des fibres de carbone sont utilisées comme fibres, et/ou après l'application des fibres métalliques et/ou des fibres recouvertes de métal sur la couche de revêtement, la surface de la couche de couverture métallique est poncée et en particulier polie, et/ou des matières de remplissage, en particulier des fibres ou de la poudre, de préférence en carbone et/ou en verre, sont incorporées dans le matériau de matrice.
